# EUROPEAN PATENT APPLICATION

(11) **EP 4 759 454 A1**
(43) Date of publication of application: **17.06.2026**
(21) Application number: 24934700.6
(22) Date of filing: 31.07.2024
(51) Int. Cl.: B09B 3/80, B09B 3/35, B09B 3/50, B09B 3/70, B29B 17/00, B29B 17/04, B09B 101/15, B09B 101/75

(54) **METHOD FOR RECOVERING SOLAR BACKSHEET**

(30) Priority: 08.04.2024 CN 202410410641
(71) Applicant: National Industrial Innovation Center of Polymer Materials Co., Ltd, Guangzhou Hi-Tech Industrial Development Zone Guangzhou, Guangdong 510663 (CN)
(72) Inventor: YANG, Huaguang, Guangzhou, Guangdong 510663 (CN); WU, Bo, Guangzhou, Guangdong 510663 (CN); XIE, Xiaoqiong, Guangzhou, Guangdong 510663 (CN); YE, Nanbiao, Guangzhou, Guangdong 510663 (CN)
(74) Representative: Metida
(86) International application number: PCT/CN2024/108709
(87) International publication number: WO 2025/213633

(57) **Abstract**

Provided is a recycling method for a solar cell backsheets, belonging to the field of polymer material recycling. In this recycling method, a specific extraction-depolymerization process is used to treat the solar cell backsheets, which can not only effectively remove adhesive components from the raw material, but also yield a PET depolymerized oligomer and a recycled outer layer material.

## Description

### TECHNICAL FIELD

The present disclosure relates to the technical field of polymer material recycling, and specifically relates to a recycling method for solar cell backsheets.

### BACKGROUND

Solar cells are a popular class of new energy devices. The environmental friendliness of solar cells lies in that when operated, solar cells do not cause pollution issues typically associated with traditional energy devices and that solar cells exhibit high recyclability after being decommissioned.

**In** existing recycling processes for solar cells, key photovoltaic materials are generally recycled through methods such as physical crushing, high-temperature pyrolysis, and chemical purification. However, typical polymer-based components, such as solar cell backsheets, need to be disassembled separately and then specially treated. Otherwise, pollution sources may be generated during recycling or materials cannot be effectively recycled.

Solar cell backsheets typically have a TPT structure, namely, a layered structure of polypropylene (PP)/adhesive/polyethylene terephthalate (PET)/adhesive/PP or polyvinylidene fluoride (PVDF)/adhesive/PET/adhesive/PVDF. After working for a long time, materials with such structure may undergo molecular chain fusion of partial polymers, and demonstrate a complex composition. In the existing processes, a solar cell backsheet is often separated from other components using an organic solvent, adhesives are dissolved with an organic solvent to enable the isolation of individual layers, and then the isolated PET layer and outer layers (PVDF and PP layers) are recycled. However, these recycled materials from these layers often have a low purity and retain significant adhesive residues, and thus can only be used in very limited fields. In some cases, an additional process is even required for purification. Moreover, if solvents with strong dissolving capacities are used during recycling, the PET layer and outer layers may also be partially dissolved, resulting in low recovery efficiency.

### SUMMARY

In view of the shortcomings in the existing technology, an objective of the present disclosure is to provide a recycling method for solar cell backsheets. In this recycling method, a specific extraction-depolymerization process is used to treat the backsheets, which can not only effectively remove adhesive components from the raw material, but also yield a PET depolymerized oligomer and a recycled outer layer material with high purity and recovery rates. The recycled materials can be directly reused without an additional treatment, demonstrating exceptionally high practicability.

In order to achieve the above objective, the present disclosure adopts the following technical solutions.

A recycling method for solar cell backsheets is provided, including the following steps:
(1) cutting and crushing the solar cell backsheets into a crushed material, subjecting the crushed material to an ultrasonic treatment in acetone at a power of 80 W to 120 W for 50 min to 70 min, and conducting filtration and drying to obtain an extraction residue A;
(2) adding the extraction residue A into a polyol containing a depolymerization catalyst, conducting microwave heating to 170°C to 200°C to enable a depolymerization reaction for 10 min to 20 min, and conducting filtration to obtain a depolymerization solution B and an insoluble matter C;
(3) subjecting the depolymerization solution B to cooling, crystallization and filtration to obtain a PET depolymerized oligomer; and
(4) subjecting the insoluble matter C to inorganic phase separation, filtration, and drying to obtain a recycled outer layer material.

A solar cell backsheet with a PVDF/adhesive/PET/adhesive/PVDF structure is taken as an example, and the adhesives in this backsheet are primarily ethylene vinyl acetate (EVA). In the existing recycling technology, the combination of a strong acid, a strong alkali, and an organic solvent with a high dissolving capacity is often used as a dissolution solution to corrode and dissolve these adhesives, so as to obtain a PET layer and a PVDF layer. However, since PET inherently exhibits poor chemical resistance and is prone to hydrolysis and oxidation, the PET layer in the backsheet has already undergone significant hydrolysis, degradation, etc. during a service life of a solar cell. If the aforementioned high-polarity dissolution solution is adopted, the material in the PET layer may also be dissolved, and the recycled PET layer will exhibit a high impurity content and a poor mechanical strength, making it impossible to be directly used. Conversely, if a low-polarity dissolution solution is adopted, adhesive components cannot be effectively removed, and a recycled product needs to be further purified to separate EVA, resulting in cumbersome operation steps.

In view of this technical dilemma, the present inventors have innovatively developed a staged extraction-depolymerization process to recycle a solar cell backsheet. Acetone is used as a solvent to pre-treat the material under specific ultrasonic conditions. Under these conditions, adhesives in the material and impurities resulting from the degradation and hydrolysis of some polymer materials can be maximally removed, and the PET and the outer layer (PVDF/PP) materials can maintain the minimum loss rate. After the influence of small-molecule adhesives is eliminated, a resulting residue is subjected to a depolymerization reaction under specific conditions, such that PET in the residue is depolymerized into an oligomer in a solution while the outer layer material remains unaffected. The solution containing the oligomer is then subjected to further separation to obtain a PET depolymerized oligomer (namely, bis(2-hydroxyethyl) terephthalate) with a high purity and a high recovery rate. According to actual requirements, the PET depolymerized oligomer can be directly re-polymerized to obtain regenerated PET, poly(butylene adipate-co-terephthalate) (PBAT), or poly(1,4-butylene-co-ethylene terephthalate) (PBET). The insoluble matter left after the depolymerization reaction is further treated, such that a polymer (PVDF/PP) in the outer layer can be easily separated from an inorganic filler. Compared to the directly recycled outer layer material, the polymer recycled in the present disclosure also exhibits a high recovery rate and can be used in significantly expanded fields.

The present inventors have found through experiments that, since the adhesives (typically EVA or acrylates), PET, and outer layer materials in solar cell backsheets exhibit solubility in different organic solvents with varying degrees of dissolution depending on dissolution conditions. The selection of inappropriate pre-extraction solvents (such as methanol or tetrahydrofuran in which the materials exhibit similar solubility) or unsuitable pre-extraction conditions (such as microwave or oil-bath conditions) may not only lead to incomplete separation of the adhesives, but also cause significant dissolution losses of materials to be recovered. During the depolymerization process, since PET in the material to be recycled is not a virgin material, it is necessary to strictly control the reaction temperature and maintain the constant temperature in real time to ensure the complete depolymerization of PET and prevent the outer layer material from being dissolved in an organic solvent. Improper operations can similarly hinder the achievement of the desired technical outcomes.

Preferably, in the step (1), a ratio of a mass of the crushed material to a volume of the acetone is 10 g : (80-120) mL.

More preferably, in the step (1), the ultrasonic treatment is conducted at a power of 90 W to 110 W for 55 min to 65 min.

As mentioned above, various components in the crushed material are all soluble in the acetone described in the present disclosure, which contains no strong corrosive components. However, under ultrasonic conditions, the various components exhibit varying solubility. When the power and duration of the ultrasonic treatment are optimized within the above respective ranges, the adhesives can be separated to the maximum extent and a minimum loss rate can be ensured for materials to be recycled.

Preferably, in the step (2), the depolymerization catalyst is at least one selected from the group consisting of a titanate nanotube, butyl titanate, zinc acetate, and titanium dioxide.

More preferably, a mass ratio of the depolymerization catalyst to the extraction residue A is (0.0005-0.015):1.

Preferably, in the step (2), the polyol is at least one selected from the group consisting of ethylene glycol, propylene glycol, butylene glycol, and pentylene glycol.

More preferably, the polyol is ethylene glycol.

When ethylene glycol is adopted as a solvent for the depolymerization reaction, PET can be depolymerized more efficiently and completely while the impact on the recycled outer layer material is minimized. As a result, the final recycled material has a high purity and a high recovery rate. Additionally, the consumption of the polyol can be reduced, leading to high cost effectiveness.

More preferably, a ratio of a volume of the polyol to a mass of the extraction residue A is (0.5-5) mL : 1 g.

Preferably, in the step (3), the cooling, crystallization, and filtration are conducted as follows: mixing the depolymerization solution B with water, and cooling to 3°C to 5°C; and after complete crystallization is achieved, conducting the filtration to obtain a crystalline solid.

Preferably, in the step (4), the inorganic phase separation is implemented through extraction with an organic solvent; and the organic solvent is at least one selected from the group consisting of methanol, dimethylformamide, tetrahydrofuran, and xylene.

Since the insoluble matter C obtained after the extraction-depolymerization and the separation contains only the outer layer polymer (PVDF/PP) and an inorganic rigid filler such as titanium dioxide, only a conventional organic solvent with a high dissolving capacity is required for organic-inorganic separation to obtain a recycled outer layer material with a high purity. However, the organic solvent is not limited to the types mentioned above. Additionally, the extraction process can be conducted under various conditions such as ambient pressure, inert atmosphere protection, a heat treatment, a microwave treatment, and an ultrasonic treatment, and is not limited to the preferred solution described above.

Preferably, in the step (2), a temperature variation during the depolymerization reaction is controlled at 2°C or less.

The present disclosure has the following beneficial effects: The present disclosure provides a recycling method for solar cell backsheets. In this recycling method, a specific extraction-depolymerization process is used to treat the backsheets, which can not only effectively remove adhesive components from the raw material, but also yield a PET depolymerized oligomer and a recycled outer layer material with high purity and recovery rates. The recycled materials can be directly reused without an additional treatment, demonstrating exceptionally high practicability.

### BRIEF DESCRIPTION OF THE DRAWINGS

FIG. 1 is a schematic flowchart of a recycling method for solar cell backsheets according to the present disclosure;
FIG. 2 shows an infrared spectrum of an adhesive component separated from solar cell backsheets through ultrasonic extraction in the recycling method according to Example 1 of the present disclosure;
FIG. 3 shows infrared spectra of a depolymerization solution B and an insoluble matter C obtained in the recycling method according to Example 1 of the present disclosure;
FIG. 4 shows an infrared spectrum of an adhesive component separated from a solar cell backsheet through ultrasonic extraction in the recycling method according to Example 2 of the present disclosure; and
FIG. 5 shows infrared spectra of a depolymerization solution B and an insoluble matter C obtained in the recycling method according to Example 2 of the present disclosure.

### DETAILED DESCRIPTION

In order to well illustrate the objectives, technical solutions, and advantages of the present disclosure, the present disclosure will be further described below in conjunction with specific examples and comparative examples, which are intended to help to comprehend the content of the present disclosure in detail, rather than to limit the present disclosure. All other examples obtained by those of ordinary skill in the art without creative efforts shall fall within the protection scope of the present disclosure. Unless otherwise specified, the experimental reagents and instruments involved in the implementation of the present disclosure are common reagents and instruments.

In the present disclosure, a solar cell backsheet 1 is a backsheet with a PVDF/EVA/PET/EVA/PVDF structure recycled by Tunghsu Azure Renewable Energy Co., Ltd.; and

A solar cell backsheet 2 is a backsheet with a PP/acrylate/PET/acrylate/PP structure recycled by Tunghsu Azure Renewable Energy Co., Ltd.

### Example 1

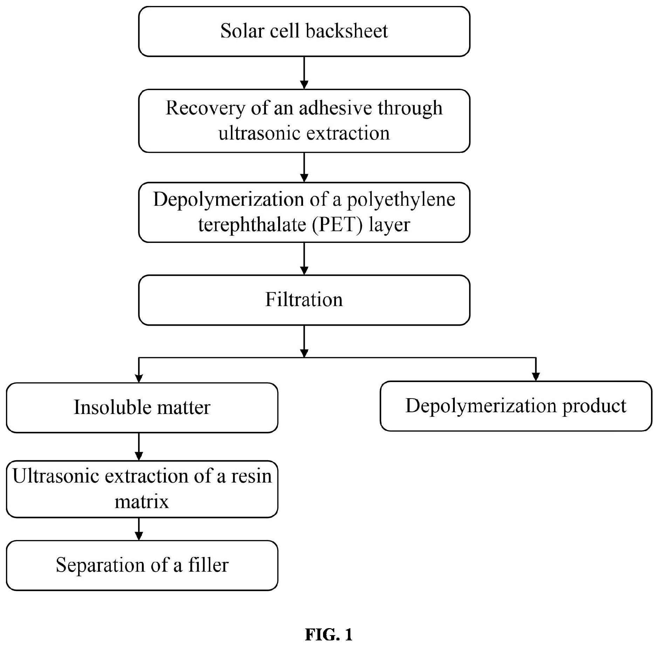

An example of the recycling method for solar cell backsheets according to the present disclosure is provided. A specific flowchart of the recycling method is shown in FIG. 1. The recycling method includes the following steps.
(1) 10 g of the solar cell backsheets 1 were cut and crushed into a crushed material. The crushed material was placed in 100 mL of acetone and subjected to an ultrasonic treatment at a power of 100 W for 60 min. Filtration and drying were then conducted to obtain 9.86 g of an extraction residue A.
(2) The extraction residue A was added into 20 mL of ethylene glycol containing 10 mg of butyl titanate. Microwave heating was conducted at 500 W to 180 °C to enable a depolymerization reaction for 15 min. Filtration was then conducted to obtain a depolymerization solution B and an insoluble matter C. A temperature variation during the depolymerization reaction was controlled at 2°C or less.
(3) The depolymerization solution B and water were mixed to obtain a mixed solution, then the mixed solution was cooled to 4°C and subjected to crystallization. After complete crystallization was achieved, filtration was conducted to obtain a crystalline solid, which was a PET depolymerized oligomer.
(4) The insoluble matter C was added into 50 mL of tetrahydrofuran, and an ultrasonic treatment was conducted at 100 W for 60 min to enable inorganic phase separation. Filtration and drying were conducted to obtain a recycled outer layer material.

### Example 2

An example of the recycling method for solar cell backsheets according to the present disclosure is provided. The recycling method includes the following steps.
(1) 50 g of the solar cell backsheets 2 were cut and crushed into a crushed material. The crushed material was placed in 400 mL of acetone and subjected to an ultrasonic treatment at a power of 100 W for 60 min. Filtration and drying were then conducted to obtain 48.25 g of an extraction residue A.
(2) The extraction residue A was added into 60 mL of ethylene glycol containing 50 mg of butyl titanate. Microwave heating was conducted at 500 W to 190 °C to enable a depolymerization reaction for 10 min. Filtration was then conducted to obtain a depolymerization solution B and an insoluble matter C. A temperature variation during the depolymerization reaction was controlled at 2°C or less.
(3) The depolymerization solution B and water were mixed to obtain a mixed solution, then the mixed solution is cooled to 4°C and subjected to crystallization. After complete crystallization was achieved, filtration was conducted to obtain a crystalline solid, which was a PET depolymerized oligomer.
(4) The insoluble matter C was added into 50 mL of xylene, and an ultrasonic treatment was conducted at 100 W for 30 min to enable inorganic phase separation. Filtration and drying were conducted to obtain a recycled outer layer material.

### Example 3

An example of the recycling method for solar cell backsheets according to the present disclosure is provided. This example is different from Example 1 only in that, in the step (1), the ultrasonic treatment is conducted at a power of 120 W for 60 min.

### Example 4

An example of the recycling method for solar cell backsheets according to the present disclosure is provided. This example is different from Example 1 only in that, in the step (1), the ultrasonic treatment is conducted at a power of 110 W for 60 min.

### Example 5

An example of the recycling method for solar cell backsheets according to the present disclosure is provided. This example is different from Example 1 only in that, in the step (1), the ultrasonic treatment is conducted at a power of 90 W for 60 min.

### Example 6

An example of the recycling method for solar cell backsheets according to the present disclosure is provided. This example is different from Example 1 only in that, in the step (1), the ultrasonic treatment is conducted at a power of 80 W for 60 min.

### Example 7

An example of the recycling method for solar cell backsheets according to the present disclosure is provided. This example is different from Example 1 only in that, in the step (1), the ultrasonic treatment is conducted at a power of 105 W for 50 min.

### Example 8

An example of the recycling method for solar cell backsheets according to the present disclosure is provided. This example is different from Example 1 only in that, in the step (1), the ultrasonic treatment is conducted at a power of 95 W for 70 min.

### Example 9

An example of the recycling method for solar cell backsheets according to the present disclosure is provided. This example is different from Example 1 only in that, in the step (2), the ethylene glycol is replaced with an equal mass of propylene glycol.

### Example 10

An example of the recycling method for solar cell backsheets according to the present disclosure is provided. This example is different from Example 1 only in that, in the step (2), the ethylene glycol is replaced with an equal mass of butylene glycol.

### Example 11

An example of the recycling method for solar cell backsheets according to the present disclosure is provided. This example is different from Example 2 only in that, in the step (2), the ethylene glycol is replaced with an equal mass of pentylene glycol.

### Comparative Example 1

A recycling method for solar cell backsheets is provided in this comparative example. This comparative example is different from Example 1 only in that the acetone is replaced with a mixed solution consisting of water, sodium hydroxide, and acetone in a mass ratio of 2:5:6.

### Comparative Example 2

A recycling method for solar cell backsheets is provided in this comparative example. This comparative example is different from Example 2 only in that the acetone is replaced with a mixed solution consisting of water, sodium hydroxide, and acetone in a mass ratio of 10:5:6.

### Comparative Example 3

A recycling method for solar cell backsheets is provided in this comparative example. This comparative example is different from Example 1 only in that the acetone is replaced with methanol.

### Comparative Example 4

A recycling method for solar cell backsheets is provided in this comparative example. This comparative example is different from Example 2 only in that the acetone is replaced with dimethylformamide.

### Comparative Example 5

A recycling method for solar cell backsheets is provided in this comparative example. This comparative example is different from Example 1 only in that the acetone is replaced with tetrahydrofuran.

### Comparative Example 6

A recycling method for solar cell backsheets is provided in this comparative example. This comparative example is different from Example 1 only in that, in the step (1), the ultrasonic treatment is replaced with a blank treatment, that is, the ultrasonic treatment is not conducted, and a duration of the blank treatment is the same as the duration of the ultrasonic treatment.

### Comparative Example 7

A recycling method for solar cell backsheets is provided in this comparative example. This comparative example is different from Example 1 only in that, in the step (1), the ultrasonic treatment is replaced with an oil-bath treatment at 70°C, and a duration of the oil-bath treatment is the same as the duration of the ultrasonic treatment.

### Comparative Example 8

A recycling method for solar cell backsheets is provided in this comparative example. This comparative example is different from Example 1 only in that, in the step (1), the ultrasonic treatment is replaced with a microwave treatment at 70°C, and a duration of the microwave treatment is the same as the duration of the ultrasonic treatment.

### Comparative Example 9

A recycling method for solar cell backsheets is provided in this comparative example. This comparative example is different from Example 1 only in that, in the step (1), the ultrasonic treatment is conducted at a power of 50 W for 80 min.

### Comparative Example 10

A recycling method for solar cell backsheets is provided in this comparative example. This comparative example is different from Example 1 only in that, in the step (1), the ultrasonic treatment is conducted at a power of 180 W for 40 min.

### Comparative Example 11

A recycling method for solar cell backsheets is provided, including the following steps:
(1) 10 g of the solar cell backsheets 1 were cut and crushed into a crushed material. The crushed material was then added into 20 mL of ethylene glycol containing 10 mg of butyl titanate. Microwave heating was conducted at 100 W to 180°C to enable a depolymerization reaction for 15 min. Filtration was then conducted to obtain a depolymerization solution B and an insoluble matter C. A temperature variation during the depolymerization reaction was controlled at 2°C or less.
(2) The depolymerization solution B and water were mixed to obtain a mixed solution, then the mixed solution is cooled to 4°C and subjected to crystallization. After complete crystallization was achieved, filtration was conducted to obtain a crystalline solid, which was a PET depolymerized oligomer.
(3) The insoluble matter C was added into 50 mL of tetrahydrofuran, and an ultrasonic treatment was conducted at 100 W for 60 min to enable inorganic phase separation. Filtration and drying were conducted to obtain a recycled outer layer material.

### Effect Example 1

To verify the recycling effectiveness of the recycling method for a solar cell backsheet described in the present disclosure, the purity and recovery rate were determined and analyzed for the PET depolymerized oligomers and the recycled outer layer materials obtained in the examples and comparative examples. A purity testing method for a PET depolymerized oligomer was as follows: high-performance liquid chromatography (HPLC) was performed using a liquid chromatograph system (Waters Corporation, E2695-2998) equipped with a diode array detector (DAD); the PET depolymerized oligomer was dissolved in a methanol/dichloromethane (mass ratio of 1:1) solution for testing; test conditions: a Discovery C-18 column (4.6 mm × 250 mm, 5 µm) was adopted as a chromatographic column, acetonitrile and water were adopted as the mobile phase in an isocratic elution mode, the injection volume was 2 µL, the column temperature was 30°C, the flow rate was 1 mL/min, and the ultraviolet detection wavelength was 254 nm.

The recovery rate of the PET depolymerized oligomer was calculated as: mass of PET depolymerized oligomer/theoretical mass of PET depolymerized oligomer × 100%.

Calculation of the theoretical mass of the PET depolymerized oligomer: A thickness and a proportion of a PET layer in a solar cell backsheet were determined by imaging a cross section of the solar cell backsheet using a microscopy or scanning electron microscopy (SEM), and then used in combination with a density of the material to calculate a theoretical mass of PET in the solar cell backsheet; and then, the theoretical mass of the PET depolymerized oligomer was calculated based on a depolymerization reaction equation.

The recovery rate of a recycled outer layer material was calculated as: mass of recycled outer layer material/theoretical mass of recycled outer layer material × 100%.

Calculation of the theoretical mass of the recovered outer layer material: The thickness and proportion of an outer layer in a solar cell backsheet were determined by imaging a cross section of the solar cell backsheet using a microscopy or SEM, and then used in combination with a density of the material to calculate the theoretical mass of the recycled outer layer material in the solar cell backsheet.

Test results are shown in Table 1.

**Table 1**

| Items | Purity of PET depolymerized oligomer (%) | Recovery rate of PET depolymerized oligomer (%) | Recovery rate of recycled outer layer material (%) |
|---|---|---|---|
| Example 1 | 99.6 | 95.0 | 96.3 |
| Example 2 | 99.2 | 95.1 | 95.7 |
| Example 3 | 99.6 | 94.0 | 94.8 |
| Example 4 | 99.6 | 94.5 | 95.5 |
| Example 5 | 99.2 | 95.1 | 96.4 |
| Example 6 | 98.8 | 95.5 | 96.6 |
| Example 7 | 99.5 | 95.3 | 96.2 |
| Example 8 | 99.5 | 95.4 | 96.3 |
| Example 9 | 99.2 | 94.9 | 96.0 |
| Example 10 | 99.0 | 94.3 | 95.8 |
| Example 11 | 98.7 | 94.1 | 95.2 |
| Comparative Example 1 | 94.3 | 87.6. | 88.3 |
| Comparative Example 2 | 94.6 | 89.1 | 89.2 |
| Comparative Example 3 | 94.2 | 92.8 | 90.1 |
| Comparative Example 4 | 94.3 | 92.2 | 91.2 |
| Comparative Example 5 | 91.2 | 91.5 | 89.7 |
| Comparative Example 6 | 90.1 | 96.4 | 97.0 |
| Comparative Example 7 | 94.7 | 91.0 | 91.1 |
| Comparative Example 8 | 94.9 | 94.0 | 92.0 |
| Comparative Example 9 | 91.5 | 96.0 | 96.8 |
| Comparative Example 10 | 99.6 | 90.2 | 91.0 |
| Comparative Example 11 | 84.2 | 97.3 | 96.9 |

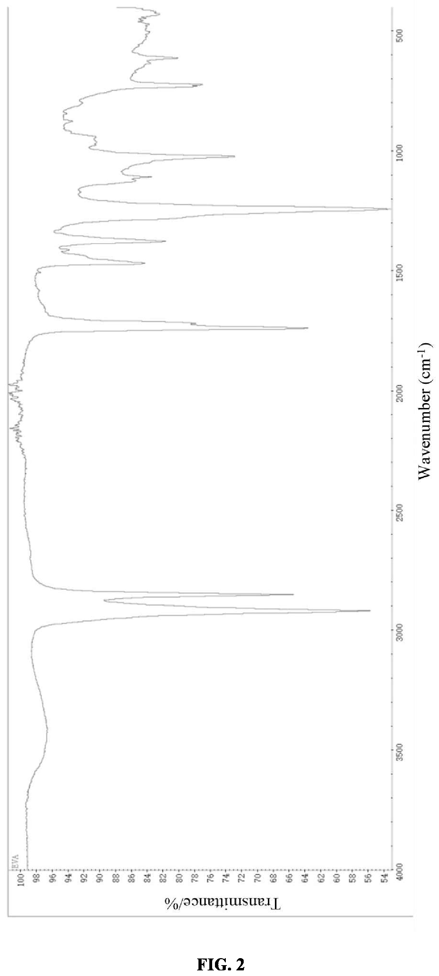

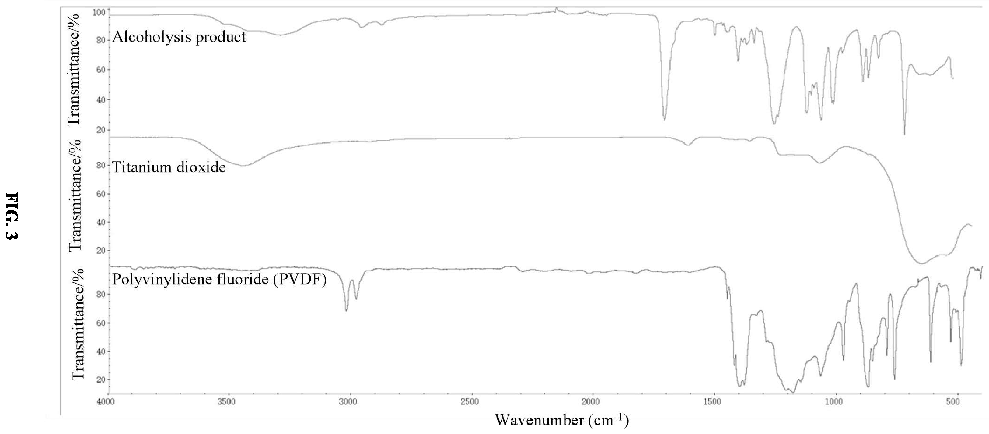

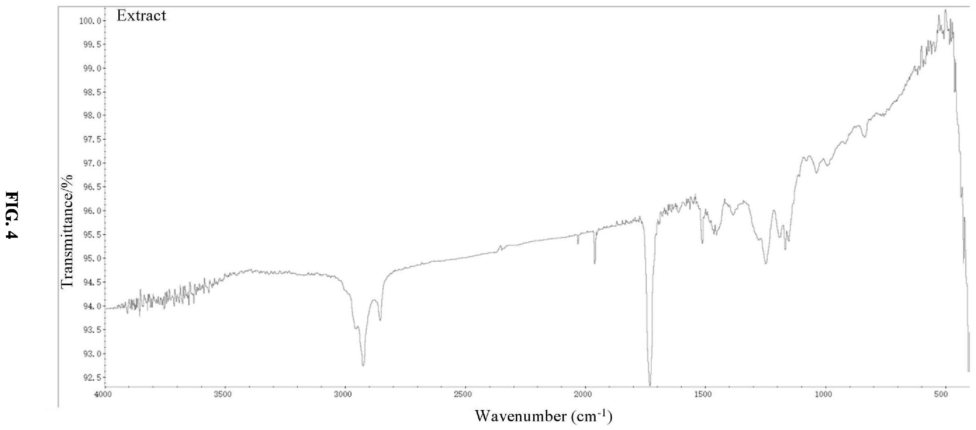

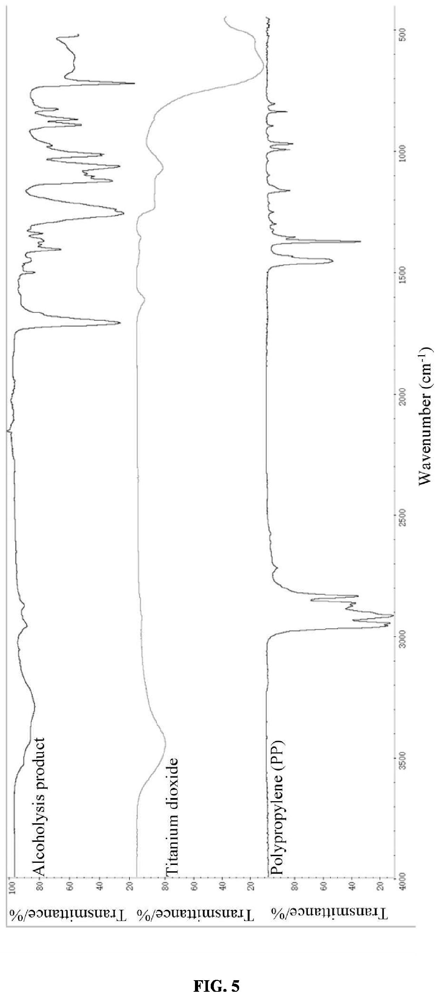

As shown in Table 1, when the recycling method for a solar cell backsheet in the present disclosure is used for recycling materials from a PVDF-based or PP-based backsheet with a TPT structure, a high-purity PET depolymerized oligomer and a recycled outer layer material can be effectively obtained, the interference of adhesives on the recycling can be effectively eliminated, and a material loss due to issues with a dissolution solvent can be avoided. The purity of the PET depolymerized oligomer can reach 98.5% or more, and the recovery rate of the PET depolymerized oligomer can reach 94% or more. The recovery rate of the recycled outer layer material can also reach 94.5% or more. Analysis was conducted with Examples 1 and 2 as examples. An extraction solution obtained after the PVDF-based solar cell backsheet was subjected to extraction according to the recycling method of the present disclosure in Example 1 was subjected to solvent removal, and infrared analysis of a residue revealed that a main component in the residue was the adhesive EVA, as shown in FIG. 2. A mixture obtained after the depolymerization reaction in Example 1 was also subjected to infrared analysis, and it was found that there was only a PET depolymerized oligomer, PVDF (the outer layer material to be recycled), and an inorganic filler titanium dioxide in the mixture, as shown in FIG. 3. Similarly, a residue left after an extraction solution in Example 2 was subjected to solvent removal and then subjected to infrared analysis. As shown in FIG. 4, it was found that a main component of the residue was an acrylate. A mixture obtained after the depolymerization reaction in Example 2 was also analyzed. As shown in FIG. 5, it was found that there was only a PET depolymerized oligomer, PP (the outer layer material to be recycled), and an inorganic filler titanium dioxide in the mixture. In contrast, a conventional solvent solution containing a corrosive component is selected to dissolve a crushed material of a solar cell backsheet in Comparative Example 1. Although this solvent solution can effectively separate the adhesives, the loss rate of a material to be recycled significantly increases and even the purity of a final product is reduced. In particular, during the initial dissolution process of the adhesives, a substantial amount of outer layer material is dissolved and lost. As a result, there is a low content of the recycled outer layer material in the insoluble matter C obtained subsequently, and there is a low yield of the final product. Comparative Example 2 has similar results to Comparative Example 1, indicating that the adverse outcomes of Comparative Example 1 are not exclusive to the recycling of just one type of solar cell backsheets. According to Examples 1 and 2 and Comparative Examples 3 to 5, although there are numerous other solvents in the art that exhibit similar dissolving capacities to acetone for PET, adhesives, and the outer layer, the replacement of acetone with these solvents significantly deteriorates the recycling outcomes. It can be seen that, in the recycling method of the present disclosure, only acetone can be selected as an organic solvent for extraction, otherwise, it is difficult to achieve the selective dissolution of the adhesive in a material to be recycled. However, even after acetone is selected as an organic solvent, appropriate extraction conditions are also required. As shown in Comparative Examples 6 to 8, oil-bath heating or microwave heating commonly used in the existing impurity removal and recycling processes are not suitable for the pre-treatment separation of an adhesive in the recycling method of the present disclosure. Such separation process may shift the primary separation target from an adhesive to PET or even an outer layer material, resulting in a low purity and a low yield of a final product. Moreover, according to Examples 1 and 3 to 6 and Comparative Examples 9 and 10, during the acetone extraction process under ultrasonic conditions, if extraction conditions are too mild, a low-polarity solvent can hardly achieve the effective separation of the adhesive, such that the adhesive may be depolymerized together with PET and thus introduced in the final PET depolymerized oligomer, which compromises the purity of the PET depolymerized oligomer. Conversely, if extraction conditions are too intense, materials to be recovered other than the adhesive may also be dissolved, ultimately leading to reduced recovery rates for the PET depolymerized oligomer and the recycled outer layer material. Therefore, the extraction conditions must be strictly controlled. Under the preferred extraction conditions where the ultrasonic power is in a range of from 90 to 110 W, the adhesive can be fully dissolved and separated during the treatment process, and PET and an outer layer material will not be significantly dissolved, which ensures a purity and a recovery rate of a product in subsequent steps such as depolymerization, crystallization, and outer layer material recycling steps. Therefore, the recycling method of the present disclosure enables a high recovery efficiency and a high purity of recovered materials. Based on the recycling results of Comparative Example 11, if the adhesive is not pre-separated before the depolymerization, although it will be dissolved together with the PET depolymerized oligomer in a liquid phase separated from an insoluble phase after the depolymerization, the adhesive cannot be effectively separated from the PET depolymerized oligomer after recrystallization of the PET depolymerized oligomer, leading to a significant reduction in the purity of the PET depolymerized oligomer. According to Examples 1 and 2 and Examples 9 to 11, when the recycling method is applied to different types of solar cell backsheets, the use of ethylene glycol as a solvent during the depolymerization reaction can lead to the optimal depolymerization effect, producing the PET depolymerized oligomer with high purity and recovery rate, and achieving a high recovery rate for the recycled outer layer material.

Finally, it should be noted that the above embodiments are provided merely to describe the technical solutions of the present disclosure, rather than to limit the protection scope of the present disclosure. Although the present disclosure is described in detail with reference to preferred embodiments, a person of ordinary skill in the art should understand that modifications or equivalent replacements may be made to the technical solutions of the present disclosure without departing from the spirit and scope of the technical solutions of the present disclosure.

## Claims

1. A recycling method for solar cell backsheets, **characterized by** comprising following steps:
(1) cutting and crushing the solar cell backsheets into a crushed material, subjecting the crushed material to an ultrasonic treatment in acetone at a power of 80 W to 120 W for 50 min to 70 min, and conducting filtration and drying to obtain an extraction residue A;
(2) adding the extraction residue A into a polyol containing a depolymerization catalyst, conducting microwave heating to 170°C to 200°C to enable a depolymerization reaction for 10 min to 20 min, and conducting filtration to obtain a depolymerization solution B and an insoluble matter C;
(3) subjecting the depolymerization solution B to cooling, crystallization and filtration to obtain a PET depolymerized oligomer; and
(4) subjecting the insoluble matter C to inorganic phase separation, filtration, and drying to obtain a recycled outer layer material.

2. The recycling method for solar cell backsheets according to claim 1, **characterized in that** in the step (1), a ratio of a mass of the crushed material to a volume of the acetone is 10 g : (80-120) mL.

3. The recycling method for solar cell backsheets according to claim 1, **characterized in that** in the step (1), the ultrasonic treatment is conducted at a power of 90 W to 110 W for 55 min to 65 min.

4. The recycling method for solar cell backsheets according to claim 1, **characterized in that** in the step (2), the depolymerization catalyst is at least one selected from the group consisting of a titanate nanotube, butyl titanate, zinc acetate, and titanium dioxide; and a mass ratio of the depolymerization catalyst to the extraction residue A is (0.0005-0.015):1.

5. The recycling method for solar cell backsheets according to claim 1, **characterized in that** in the step (2), the polyol is at least one selected from the group consisting of ethylene glycol, propylene glycol, butylene glycol, and pentylene glycol; and a ratio of a volume of the polyol to a mass of the extraction residue A is (0.5-5) mL : 1 g.

6. The recycling method for solar cell backsheets according to claim 1, **characterized in that** in the step (2), a temperature variation during the depolymerization reaction is controlled at 2°C or less.

7. The recycling method for solar cell backsheets according to claim 1, **characterized in that** in the step (3), the cooling, crystallization, and filtration are conducted as follows: mixing the depolymerization solution B with water, and cooling to 3°C to 5°C; and after complete crystallization is achieved, conducting the filtration to obtain a crystalline solid.

8. The recycling method for solar cell backsheets according to claim 1, **characterized in that** in the step (4), the inorganic phase separation is implemented through extraction with an organic solvent; and the organic solvent is at least one selected from the group consisting of methanol, dimethylformamide, tetrahydrofuran, and xylene.
